# FASCICULE DE BREVET EUROPEEN

(11) **EP 3 728 939 B1**
(45) Date de publication et mention de la délivrance du brevet: **27.04.2022**
(21) Numéro de dépôt: 18833477.5
(22) Date de dépôt: 12.12.2018
(51) Int. Cl.: F21S 43/14, F21S 43/40, F21S 43/31, F21S 43/20, B60Q 1/26

(54) **DISPOSITIF DE SIGNALISATION LUMINEUX POUR VÉHICULE AUTOMOBILE OFFRANT UN MEILLEUR CONFORT VISUEL POUR LES UTILISATEURS DE LA ROUTE**
SIGNALLEUCHTE FÜR KRAFTFAHRZEUGE MIT BESSEREM SEHKOMFORT FÜR DIE VERKEHRSTEILNEHMER
LIGHT SIGNALLING DEVICE FOR MOTOR VEHICLES PROVIDING BETTER VISUAL COMFORT FOR ROAD USERS

(30) Priorité: 18.12.2017 FR 1762344
(43) Date de publication de la demande: 28.10.2020
(73) Titulaire: Marelli Automotive Lighting France, 89330 Saint-Julien-du-Sault (FR)
(72) Inventeur: BERGERAT, Stéphanie, 78190 Trappes (FR); ARRIVET, Franck, 78190 Trappes (FR); KUSIAK, Yann, 78190 Trappes (FR)
(74) Mandataire: Jacobacci Coralis Harle
(86) Numéro de dépôt international: PCT/FR2018/053235
(87) Numéro de publication internationale: WO 2019/122613

(56) Documents cités:
- EP-A1- 1 201 500
- DE-A1-102010 054 923
- DE-A1-102013 217 284
- JP-A- 2010 140 830
- JP-A- 2017 162 736
- US-A1- 2017 267 164
- US-B2- 9 416 935

## Description

### DOMAINE TECHNIQUE AUQUEL SE RAPPORTE L'INVENTION

La présente invention concerne le domaine technique de la signalisation lumineuse. Elle concerne plus particulièrement un dispositif de signalisation lumineux pour véhicule automobile.

### ÉTAT DE LA TECHNIQUE

Les normes réglementaires imposent aux véhicules automobiles d'être équipés de dispositifs de signalisation lumineux pour indiquer leur présence ainsi que leurs intentions aux autres usagers de la route. On peut notamment citer les feux clignotants de couleur ambre permettant d'indiquer un changement de direction du véhicule, les feux de position de couleur rouge et d'intensité modérée, les feux-stops également de couleur rouge, mais d'intensité plus forte pour signaler un freinage. Afin de répondre aux normes en vigueur, ces différents feux utilisent des sources de lumière puissantes afin que leurs signaux lumineux soient visibles à distance. EP 1 201 500 A1 montre un tel dispositif de signalisation.

Les diodes électroluminescentes permettent d'atteindre les niveaux d'intensité lumineuse, exigés par la réglementation, tout en étant plus économes en consommation électrique par rapport aux lampes à incandescence ou à décharge. Toutefois, les diodes électroluminescentes présentent l'inconvénient d'émettre des faisceaux lumineux dont l'angle d'ouverture est relativement étroit. De ce fait, la lumière émise par une diode électroluminescente est perçue comme un point lumineux d'intensité vive, susceptible au-delà d'un certain temps d'observation d'incommoder ou de gêner un utilisateur de la route.

La présente invention vise à résoudre cet inconvénient en proposant un dispositif de signalisation lumineux pour véhicule automobile, utilisant des sources de lumière dont les angles d'ouverture sont étroits et offrant un meilleur confort visuel pour les utilisateurs de la route.

### OBJET DE L'INVENTION

Pour cela, la présente invention propose un dispositif de signalisation lumineux pour véhicule automobile, comprenant une première source de lumière apte à émettre un premier faisceau lumineux, un système optique convergent positionné en vis-à-vis de la première source de lumière de sorte que son foyer principal objet est situé au niveau de la première source de lumière, et une plaque supérieure en vis-à-vis d'une plaque inférieure.

L'invention est remarquable en ce que la plaque supérieure et la plaque inférieure sont agencées de manière à être parallèles ou sensiblement parallèles au premier faisceau lumineux issu du système optique, et au moins une partie du premier faisceau lumineux passe entre lesdites plaques, et en ce que la plaque inférieure réfléchit le premier faisceau lumineux et la plaque supérieure est transparente et/ou translucide au premier faisceau lumineux.

En d'autres termes, une partie du premier faisceau lumineux passant entre les plaques supérieure et inférieure, est réfléchie par la plaque inférieure en direction de la plaque supérieure. Or, la plaque supérieure est configurée pour laisser passer au moins une partie du premier faisceau lumineux. Ainsi, de façon avantageuse, un observateur du dispositif de signalisation perçoit d'une part une zone de forte intensité lumineuse entre les plaques supérieure et inférieure et, d'autre part, une zone de plus faible intensité lumineuse adjacente à la plaque supérieure. Le signal lumineux adjacent permet d'atténuer la perception d'un point lumineux d'intensité vive entre les plaques supérieure et inférieure, susceptible au-delà d'un certain temps d'observation d'incommoder ou de gêner les utilisateurs de la route. Le dispositif de signalisation selon l'invention est donc apte à émettre simultanément, à partir d'une source de lumière dont l'angle d'ouverture est relativement étroit, un signal lumineux conforme aux normes réglementaires imposées aux véhicules automobiles, et un signal lumineux adjacent de plus faible intensité offrant un meilleur confort visuel à un observateur du dispositif de signalisation.

Selon l'invention, le dispositif de signalisation comprend une paroi de réflexion en vis-à-vis de la plaque supérieure, de sorte à former une cavité entre la paroi de réflexion et la plaque supérieure, par laquelle une partie du premier faisceau lumineux est apte à se propager. Ce mode de réalisation permet d'atténuer la différence d'intensité lumineuse entre le signal lumineux conforme aux normes réglementaires et le signal lumineux adjacent mentionné ci-dessus.

De préférence, la paroi de réflexion est apte à réfléchir une partie du premier faisceau lumineux. Ce mode de réalisation permet une meilleure homogénéisation du signal lumineux au niveau de la cavité. Pour cela, la paroi de réflexion peut être recouverte au moins en partie par une couche métallique, comme de l'aluminium ou du chrome.

Selon une autre variante de réalisation de l'invention, la paroi de réflexion mentionnée ci-dessus est en retrait d'une extrémité distale de la plaque supérieure. Selon l'invention, les termes « proximal » et « distal » font référence à la position d'un objet par rapport au système optique. Ce mode de réalisation vise à permettre une plus large diffusion du signal lumineux adjacent, selon un angle oblique par rapport au sens de déplacement du premier faisceau lumineux entre les plaques inférieure et supérieure.

Selon une autre variante de réalisation de l'invention, la plaque supérieure est maintenue au niveau d'une extrémité proximale, à un support distant de la paroi de réflexion afin de permettre un jeu mécanique entre le support et ladite paroi. Selon un mode de réalisation préféré, au moins une portion du support, située entre la plaque supérieure et la paroi de réflexion, est transparente pour le premier faisceau lumineux.

Selon une autre variante de réalisation de l'invention, le dispositif de signalisation comprend au moins une deuxième source de lumière apte à émettre un deuxième faisceau lumineux, et chaque deuxième source de lumière est agencée de manière à ce que son faisceau lumineux passe entre la paroi de réflexion et la plaque inférieure.

De préférence, le dispositif de signalisation comprend au moins deux premières sources de lumière, chaque première source de lumière faisant face à son propre système optique convergent, et le dispositif de signalisation comprend au moins une deuxième source de lumière agencée entre deux premières sources de lumière.

Selon un mode de réalisation spécifique, le dispositif de signalisation comprend au moins une deuxième source de lumière plus proche ou plus éloignée de la plaque inférieure, par rapport à la position d'une première source de lumière.

Selon une autre variante de réalisation de l'invention, au moins une première et une deuxième source de lumière sont agencées sur une même surface plane ou sensiblement plane et perpendiculaire ou sensiblement perpendiculaire à la plaque inférieure. De préférence, au moins deux deuxièmes sources de lumière sont agencées entre deux premières sources de lumière.

Selon une autre variante de réalisation de l'invention, au moins une deuxième source de lumière émet un deuxième faisceau lumineux de couleur ou de teinte différentes, par rapport à un premier faisceau lumineux émis par une première source de lumière.

Selon une autre variante de réalisation de l'invention, au moins une première source de lumière émet un premier faisceau lumineux dont la couleur et l'intensité lumineuse sont conformes aux normes en vigueur pour indiquer le changement de direction d'un véhicule automobile, et au moins une deuxième source de lumière émet un deuxième faisceau lumineux dont la couleur et l'intensité lumineuse sont conformes aux normes en vigueur pour indiquer le recul d'un véhicule automobile.

Selon une autre variante de réalisation de l'invention, le dispositif de signalisation comprend une coque transparente ou translucide, positionnée entre l'extrémité distale de la paroi de réflexion et l'extrémité distale de la plaque inférieure, de sorte que les faisceaux lumineux émis par la ou les sources de lumière du dispositif de signalisation passent à travers ladite coque. Selon un mode de réalisation préféré, la coque longe au moins une partie de la plaque supérieure de manière à permettre à au moins une partie d'un premier faisceau lumineux réfléchie par la plaque inférieure, de sortir du dispositif de signalisation selon une direction perpendiculaire ou oblique par rapport à ladite plaque inférieure. Selon un autre mode de réalisation, la paroi de la coque en vis-à-vis de la plaque supérieure est concave ou sensiblement concave, ou forme un motif de type escalier dont les marches sont parallèles ou sensiblement parallèles à la plaque supérieure. De préférence, les contremarches sont obliques par rapport à la plaque supérieure. Selon un autre mode de réalisation préféré, la coque est opaque au niveau des marches, aux faisceaux lumineux émis par le dispositif de signalisation.

Bien entendu, les différentes caractéristiques, variantes et formes de réalisation mentionnées ci-dessus peuvent être associées les unes avec les autres selon diverses combinaisons, dans la mesure où elles ne sont pas incompatibles ou exclusives les unes des autres.

L'invention porte également sur un feu de signalisation pour véhicule automobile comprenant un dispositif de signalisation lumineux tel que décrit ci-dessus, ainsi que sur un véhicule automobile comprenant ledit feu de signalisation.

### DESCRIPTION DES FIGURES

La description qui va suivre en regard des dessins annexés suivants, donnés à titre d'exemples non limitatifs, permettra de mieux comprendre en quoi consiste l'invention et comment elle peut être réalisée :
- la figure 1 représente une vue schématique d'une coupe longitudinale d'un premier mode de réalisation d'un dispositif de signalisation lumineux éteint, selon l'invention ;
- la figure 2 représente une vue schématique d'une coupe longitudinale d'un premier mode de réalisation d'un dispositif de signalisation lumineux allumé, selon l'invention ;
- la figure 3 représente une vue schématique d'une coupe longitudinale d'un deuxième mode de réalisation d'un dispositif de signalisation lumineux éteint, selon l'invention ;
- la figure 4 représente une vue schématique d'une coupe longitudinale d'un deuxième mode de réalisation d'un dispositif de signalisation lumineux allumé, selon l'invention.

### DESCRIPTION DETAILLEE D'UN EXEMPLE DE REALISATION

Pour rappel, l'invention propose un dispositif de signalisation lumineux pour véhicule automobile, utilisant des sources de lumière dont les angles d'ouverture sont faibles et offrant un meilleur confort visuel pour les utilisateurs de la route.

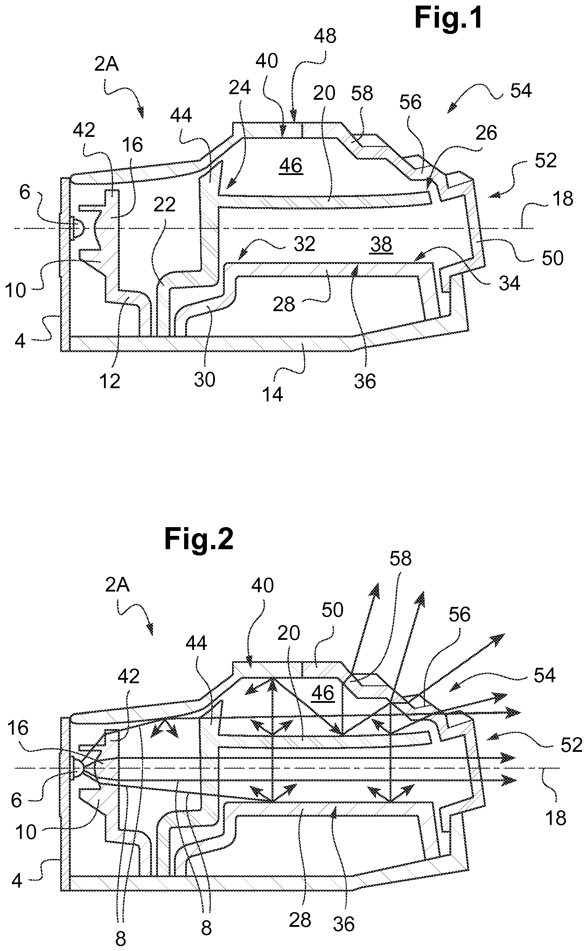

Les figures 1 et 2 illustrent un premier mode de réalisation d'un dispositif de signalisation lumineux selon l'invention. Le dispositif de signalisation 2A comprend une carte électronique 4 sur laquelle est agencée une première source de lumière 6, apte à émettre un premier faisceau lumineux 8 représenté sur la figure 2. La première source de lumière se caractérise par un faisceau lumineux dont l'angle d'ouverture est étroit ou relativement étroit, c'est-à-dire de l'ordre de 45° ou inférieur. La première source de lumière se caractérise également par une intensité lumineuse suffisante pour répondre à la réglementation en vigueur concernant les dispositifs de signalisation lumineux pour véhicule automobile, c'est-à-dire de l'ordre de de 4 à 17 Candela dans le cas d'une utilisation pour éclairer une lanterne, ou bien entre 50 à 500 Candela dans le cas d'une utilisation pour éclairer un clignotant. Le premier faisceau lumineux 8 est de couleur adaptée à la réglementation mentionnée ci-dessus, c'est-à-dire de couleur ambre, rouge ou blanche. Bien entendu, les valeurs mentionnées ci-dessus sont susceptibles d'évoluer en fonction des particularités régionales de la réglementation en matière de signalisation lumineuse pour véhicules automobiles. Selon le présent exemple, la première source de lumière 6 est une diode électroluminescente.

Le dispositif de signalisation comprend également un système optique 10 maintenu à distance de la carte électronique 4 et en vis-à-vis de la première source de lumière 6 par l'intermédiaire d'un support 12. Une extrémité du support 12 est maintenue par des moyens connus à une paroi de maintien 14 du dispositif de signalisation. Le système optique 10 et le support 12 sont réalisés à partir d'un même matériau moulé, dans le cas présent à partir de polyméthacrylate de méthyle (PMMA) et/ou de polycarbonate (PC). Le système optique 10 comporte une lentille convergente 16, dont l'axe optique 18 et le foyer principal objet passent par la première source de lumière 6. La lentille convergente se caractérise par un foyer objet principal compris entre 0,5 mm et 3 mm. Ainsi, au moins une partie du premier faisceau lumineux 8 passe à travers la lentille convergente 16 et se propage en aval du système optique 10. Selon la présente description, les termes « amont » et « aval » font référence au sens de propagation du premier faisceau lumineux traversant le système optique 10.

Le dispositif de signalisation 2A comprend également une plaque supérieure 20 placée en aval dudit système optique 10 et sensiblement parallèle à l'axe optique 18 de la lentille convergente 16. La plaque supérieure est maintenue à distance de l'axe optique 18 par l'intermédiaire d'un autre support 22. Une extrémité du support 22 est maintenue par des moyens connus à la paroi de maintien 14 du dispositif de signalisation. La plaque supérieure 20 est agencée à une distance de l'axe optique 18 qui est comprise entre 3 mm et 10 mm, de préférence entre 3,5 mm et 4,5 mm. La plaque supérieure 20 a une épaisseur comprise entre 1,5 mm et 2,5 mm, de préférence entre 1,8 mm et 2 mm. Par le terme « épaisseur », on entend une dimension selon une direction normale aux plus grandes faces de l'objet considéré, l'épaisseur de la plaque supérieure est ainsi définie selon une direction normale à l'axe optique 18. La plaque supérieure 20 s'étend entre une extrémité proximale 24, située au plus proche du système optique 10, et une extrémité distale 26. Les extrémités proximale 24 et distale 26 de la plaque supérieure 20 sont éloignées d'une distance comprise entre 10 mm et 150 mm, de préférence entre 20 mm et 50 mm. La plaque supérieure 20 est retenue par le support 22 au niveau de son extrémité proximale 24. Le support 22 présente une forme longitudinale dont les plus grandes faces sont perpendiculaires ou sensiblement perpendiculaires à l'axe optique 18, de manière à légèrement ou très légèrement dévier le premier faisceau lumineux 8 au niveau de l'axe optique 18. Le support 22 a une épaisseur comprise entre 1,5 mm et 2,5 mm, de préférence entre 1,8 mm et 2 mm. Selon le présent exemple, le support 22 et la plaque supérieure 20 sont réalisés à partir d'un même matériau moulé, dans le cas présent à partir de polyméthacrylate de méthyle (PMMA) et/ou de polycarbonate (PC). La plaque supérieure 20 et son support 22 sont réalisés de manière à être transparents et/ou translucides pour le premier faisceau lumineux 8.

Le dispositif de signalisation 2A comprend aussi une plaque inférieure 28 placée en aval du système optique 10 et également parallèle à l'axe optique 18 de la lentille convergente 16. La plaque supérieure est maintenue à distance de l'axe optique 18 par l'intermédiaire d'un autre support 30, de sorte que l'axe optique 18 passe entre la plaque supérieure 20 et la plaque inférieure 28. Une extrémité du support 30 est maintenue par des moyens connus à la paroi de maintien 14 du dispositif de signalisation. La plaque inférieure 28 est agencée à une distance de l'axe optique 18 qui est comprise entre 3 mm et 10 mm, de préférence entre 3,5 mm et 4,5 mm. La plaque inférieure 28 a une épaisseur comprise entre 1,5 mm et 2,8 mm, de préférence entre 1,8 mm et 2 mm. La plaque inférieure 28 s'étend entre une extrémité proximale 32, située au plus proche du système optique 10, et une extrémité distale 34. Les extrémités proximale 32 et distale 34 de la plaque inférieure 28 sont éloignées d'une distance comprise entre 10 mm et 150 mm, de préférence entre 20 mm et 50 mm. La plaque inférieure 28 est retenue par le support 30 au niveau de son extrémité proximale 32. Selon le présent exemple, le support 30 et la plaque inférieure 28 forment une même pièce moulée, à partir de polyméthacrylate de méthyle (PMMA) et/ou de polycarbonate (PC). À la différence de la plaque supérieure 20, la plaque inférieure 28 est configurée pour réfléchir le premier faisceau lumineux 8. Pour cela, la plaque inférieure peut être teintée avec une couleur claire et/ou sa surface 36 en vis-à-vis de la plaque supérieure 20 peut être traitée et/ou recouverte par un matériau de manière à être réfléchissante. De préférence, les extrémités distales des plaques supérieure et inférieure sont comprises dans un même plan normal ou sensiblement normal à l'axe optique 18 de la lentille convergente 16, de manière à délimiter un passage ou tunnel 38.

Le dispositif de signalisation 2A comprend également une paroi de réflexion 40, qui comme son nom l'indique est configurée pour réfléchir le premier faisceau lumineux 8. La paroi de réflexion est agencée en vis-à-vis du système optique 10 et de la plaque supérieure 20. La paroi de réflexion 40 est maintenue au niveau de la carte électronique 4 par des moyens connus. Il est à noter que le système optique 10 et le support 12 sont tous deux prolongés par des ergots 42 et 44, permettant de maintenir la paroi de réflexion à distance. Les ergots sont réalisés dans les mêmes matériaux que le système optique et le support, de sorte à permettre la transmission d'une partie du premier faisceau lumineux. De préférence, les ergots 42 et 44 sont transparents pour le premier faisceau lumineux 8. Comme illustré par la figure 2, les ergots permettent avantageusement à une partie du premier faisceau lumineux 8 ne passant pas par le système optique 10, de se propager directement ou indirectement depuis la première source de lumière 6 jusqu'à une cavité 46 délimitée par la paroi de réflexion 40 et la plaque supérieure 20. La partie distale 48 de la paroi de réflexion est en retrait par rapport à la partie distale 26 de la plaque supérieure 20, de manière à ce qu'au moins une partie de la plaque supérieure soit visible depuis l'extérieur du dispositif de signalisation 2A, selon une direction oblique par rapport à l'axe optique 18 de la lentille convergente 16.

Le dispositif de signalisation 2A comprend également une coque 50 transparente ou translucide pour le premier faisceau lumineux 8. La coque 50 s'étend entre l'extrémité distale 48 de la paroi de réflexion 40 et l'extrémité distale 34 de la plaque inférieure 28, de manière à obturer au niveau d'une face avant du dispositif de signalisation le tunnel 38 et la cavité 46. La coque comprend une première partie 52 sensiblement plane et normale à l'axe optique 18, entre l'extrémité distale 26 de la plaque supérieure 20 et l'extrémité distale 34 de la plaque inférieure 28. La coque comprend une deuxième partie 54 s'étendant entre l'extrémité distale 26 de la plaque supérieure 20 et l'extrémité distale 48 de la paroi de réflexion 40. Cette deuxième partie 54 de la coque est de forme complexe, son profil s'apparente à celui d'un escalier. Plus précisément, la deuxième partie 54 de la coque comporte des alternances de marche 56 et de contremarches 58. Les marches 56 sont sensiblement parallèles à l'axe optique 18, tandis que les contremarches sont obliques par rapport audit axe. Selon le présent exemple, la longueur des marches est comprise entre 4 mm et 10 mm, de préférence entre 4 mm et 8 mm, l'angle d'inclinaison des contremarches 58 par rapport à l'axe optique 18 est compris entre 10° et 90°, de préférence entre 35° et 45°.

Comme illustré par la figure 2, l'agencement du dispositif de signalisation 2A décrit ci-dessus, permet avantageusement au faisceau lumineux émis par la première source de lumière 6 de passer en grande partie entre la plaque supérieure 20 et la plaque inférieure 28. Ainsi, la première source de lumière 6 éclaire avec une intensité lumineuse suffisante la première partie 52 de la coque 50, de manière à ce que le dispositif de signalisation 2A soit conforme aux normes en vigueur concernant les dispositifs de signalisation pour véhicule automobile. Comme mentionné ci-dessus, la lumière émise par une diode électroluminescente est perçue comme un point lumineux d'intensité vive, susceptible au-delà d'un certain temps d'observation d'incommoder ou de gêner les utilisateurs de la route. Afin de répondre à ce problème, le dispositif de signalisation 2A selon l'invention se caractérise par le fait que le premier faisceau lumineux 8 est en partie réfléchi par la plaque inférieure 28 en direction de la plaque supérieure 20. Or, la plaque supérieure 20 est transparente ou translucide de sorte à permettre à une partie du premier faisceau lumineux 8 réfléchi et moins intense, de passer à travers la deuxième partie 54 de la coque 50. De ce fait, lorsque la première source de lumière 6 est allumée, un observateur perçoit une zone d'intensité lumineuse forte correspondant à la première partie 52 de la coque et une zone adjacente de moindre intensité correspondant à la deuxième partie 54 de ladite coque. Ainsi, l'observateur se trouve nettement moins incommodé par la zone d'intensité lumineuse forte en raison de la présence d'une zone d'intensité moindre adjacente ou se trouvant à proximité. L'invention permet avantageusement l'utilisation de sources de lumière dont les angles d'ouverture sont étroits, dans des dispositifs de signalisation lumineux pour véhicule automobile, offrant un meilleur confort visuel pour les utilisateurs de la route. Selon un autre avantage, les ergots 42 et 44 permettent avantageusement à une partie du premier faisceau lumineux ne passant pas par la lentille convergente 16, de se propager dans la cavité 46 afin d'atténuer la différence d'intensité lumineuse entre la première partie 52 et de la deuxième partie 54 de la coque 50, perçue par un observateur.

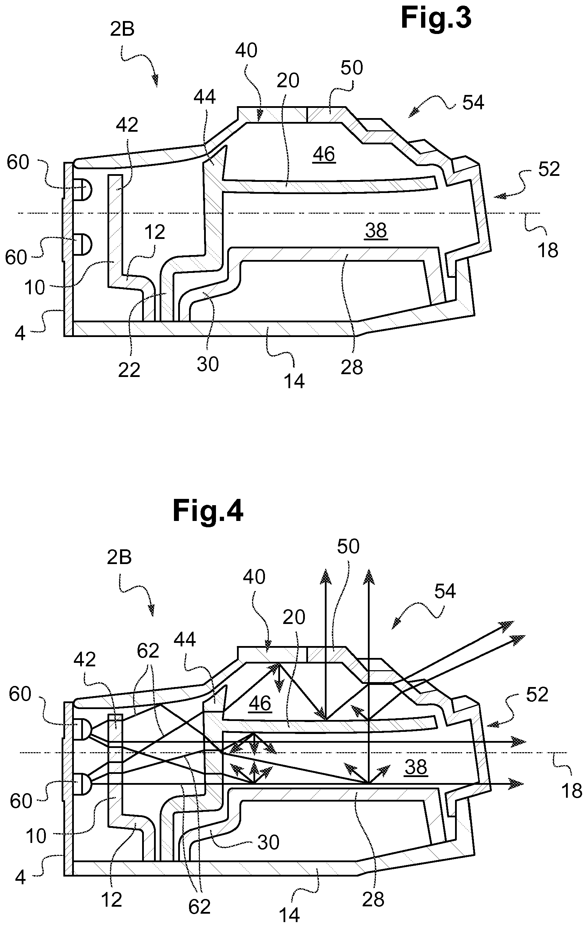

Les figures 3 et 4 illustrent à présent un autre mode de réalisation d'un dispositif de signalisation selon l'invention. Les mêmes références sont utilisées sur les figures 1 à 4 pour identifier les objets identiques. Ce dispositif de signalisation 2B se distingue du dispositif décrit ci-dessus en ce qu'il comprend des deuxièmes sources de lumière 60, au nombre de deux selon le présent exemple. Les deuxièmes sources de lumière sont aptes à émettre des deuxièmes faisceaux lumineux et sont agencées comme la première source de lumière 6 sur la carte électronique 4. Toutefois, les deuxièmes sources de lumière sont décalées latéralement par rapport à la première source de lumière 6 et de préférence alignées selon une direction sensiblement perpendiculaire à l'axe optique 18 de la lentille convergente 16. Par le terme « latéralement », on entend un déplacement à la surface de la carte électronique 4, selon une direction normale à l'axe optique 18 et sensiblement parallèle aux plaques supérieure et inférieure. Les figures 3 et 4 illustrent ainsi deux plans de coupe du dispositif de signalisation 2B qui sont décalés latéralement par rapport aux coupes représentées par les figures 1 et 2. C'est pour cette raison que la lentille convergente 16 n'est pas représentée sur ces figures. Selon le présent exemple, les sources de lumière sont éloignées de l'axe optique 18 d'une distance comprise entre 0,5 mm et 10 mm, de préférence entre 2 mm et 3 mm.

Comme illustré par la figure 3, le système optique 10 est plan au niveau des deuxièmes sources de lumière afin d'éviter une concentration des deuxièmes faisceaux lumineux 62 entre les plaques supérieure et inférieure. En d'autres termes, le système optique 10 vise à permettre une répartition plus ou moins homogène des deuxièmes faisceaux lumineux 62 entre la paroi de réflexion 40 et la plaque inférieure 28. Pour cela, le système optique 10 peut être grainé au niveau des deuxièmes sources de lumière 60, afin de favoriser une diffusion plus homogène des deuxièmes faisceaux lumineux au niveau de la coque 50.

De préférence, les deuxièmes faisceaux lumineux sont de couleur différente par rapport au premier faisceau lumineux 8. Selon le présent exemple, la couleur et l'intensité du premier faisceau lumineux 8 sont conformes aux normes en vigueur pour indiquer le changement de direction d'un véhicule automobile, et au moins une deuxième source de lumière 60 émet un deuxième faisceau lumineux dont la couleur et l'intensité lumineuse sont conformes aux normes en vigueur pour indiquer le recul d'un véhicule automobile. Par exemple, un premier et un deuxième faisceau lumineux peuvent être respectivement de couleur ambre et de couleur blanche. Ainsi, le dispositif lumineux peut émettre plusieurs signaux lumineux différents, alternativement ou en même temps. Pour cela, les sources de lumière sont commandées par des moyens connus qui ne sont pas représentés sur les figures, afin de faciliter la compréhension de l'invention par le lecteur. De préférence, les deuxièmes sources de lumière sont des diodes électroluminescentes similaires à la première source de lumière.

Selon une variante de réalisation d'un dispositif de signalisation décrit ci-dessus, la surface 36 de la plaque inférieure 28, en vis-à-vis de la plaque supérieure 20, est grainée de manière à favoriser une diffusion plus homogène de la lumière réfléchie, en direction de la plaque supérieure 20.

Selon une variante de réalisation d'un dispositif de signalisation décrit ci-dessus, la plaque supérieure 20 est grainée de sorte à favoriser une diffusion plus homogène des faisceaux lumineux réfléchis sur la plaque inférieure 28.

Selon une variante de réalisation d'un dispositif de signalisation décrit ci-dessus, les deuxièmes sources de lumière 60 alternent avec des premières sources de lumière 6.

Selon une variante de réalisation d'un dispositif de signalisation décrit ci-dessus, au moins une marche 56 formée par la coque 50, est traitée de manière à être opaque aux faisceaux lumineux émis par le dispositif de signalisation. A titre d'exemple, une ou plusieurs marches peuvent être recouvertes d'un matériau opaque.

## Revendications

1. Dispositif de signalisation (2A, 2B) lumineux pour véhicule automobile, comprenant une première source de lumière (6) apte à émettre un premier faisceau lumineux (8), un système optique convergent (16) positionné en vis-à-vis de la première source de lumière (6) de sorte que son foyer principal objet est situé au niveau de la première source de lumière (6) et une plaque supérieure (20) en vis-à-vis d'une plaque inférieure (28), lesdites plaques sont agencées de manière à être parallèles ou sensiblement parallèles au premier faisceau lumineux (8) issu du système optique et au moins une partie du premier faisceau lumineux (8) passe entre lesdites plaques, et la plaque inférieure (28) réfléchit le premier faisceau lumineux (8) et la plaque supérieure (20) est transparente et/ou translucide au premier faisceau lumineux (8), le dispositif de signalisation (2A, 2B) se **caractérisé en ce qu'**il comprend une paroi de réflexion (40) en vis-à-vis de la plaque supérieure (20), de sorte à former entre ladite paroi et la plaque supérieure (20) une cavité (46), par laquelle une partie du premier faisceau lumineux (8) est apte à se propager.

2. Dispositif de signalisation (2A, 2B) lumineux selon la revendication précédente, **caractérisé en ce que** la paroi de réflexion (40) est apte à réfléchir une partie du premier faisceau lumineux (8).

3. Dispositif de signalisation (2A, 2B) lumineux selon la revendication précédente, **caractérisé en ce que** la paroi de réflexion (40) est recouverte au moins en partie par une couche métallique.

4. Dispositif de signalisation (2A, 2B) lumineux selon l'une des revendications précédentes, **caractérisé en ce que** la paroi de réflexion (40) est en retrait d'une extrémité distale (26) de la plaque supérieure (20).

5. Dispositif de signalisation (2A, 2B) lumineux selon l'une des revendications précédentes, **caractérisé en ce que** la plaque supérieure (20) est maintenue au niveau d'une extrémité proximale (24), à un support (22) distant de la paroi de réflexion (40).

6. Dispositif de signalisation (2A, 2B) lumineux selon la revendication précédente, **caractérisé en ce qu'**au moins une portion (44) du support (22), située entre la plaque supérieure (20) et la paroi de réflexion (40), est transparente pour le premier faisceau lumineux (8).

7. Dispositif de signalisation (2B) lumineux selon l'une des revendications précédentes, **caractérisé en ce qu'**il comprend au moins une deuxième source de lumière (60) apte à émettre un deuxième faisceau lumineux (62), et **en ce que** chaque deuxième source de lumière (60) est agencée de manière à ce que son faisceau lumineux passe entre la paroi de réflexion (40) et la plaque inférieure (28).

8. Dispositif de signalisation (2B) lumineux selon la revendication précédente, **caractérisé en ce qu'**il comprend au moins deux premières sources de lumière (6), chaque première source de lumière faisant face à son propre système optique convergent (16), et **en ce qu'**il comprend au moins une deuxième source de lumière (60) agencée entre deux premières sources de lumière.

9. Dispositif de signalisation (2B) lumineux selon la revendication précédente, caractérisé en qu'il comprend au moins une deuxième source de lumière (60) plus proche ou plus éloignée de la plaque inférieure (28), par rapport à la position d'une première source de lumière (6).

10. Dispositif de signalisation (2B) lumineux selon l'une des revendications 7 à 9, **caractérisé en ce qu'**au moins une première et une deuxième source de lumière sont agencées sur une même surface plane ou sensiblement plane et perpendiculaire ou sensiblement perpendiculaire à la plaque inférieure (28).

11. Dispositif de signalisation (2B) lumineux selon la revendication précédente, **caractérisé en ce qu'**au moins deux deuxièmes sources de lumière (60) sont agencées entre deux premières sources de lumière (6).

12. Dispositif de signalisation (2B) lumineux selon l'une des revendications 7 à 11, **caractérisé en ce qu'**au moins une deuxième source de lumière (60) émet un deuxième faisceau lumineux (62) de couleur ou de teinte différente, par rapport à un premier faisceau lumineux (8) émis par une première source de lumière (6).

13. Dispositif de signalisation (2B) lumineux selon la revendication précédente, **caractérisé en ce qu'**au moins une première source de lumière (6) émet un premier faisceau lumineux (8) dont la couleur et l'intensité lumineuse sont conformes aux normes en vigueur pour indiquer le changement de direction d'un véhicule automobile, et **en ce qu'**au moins une deuxième source de lumière (60) émet un deuxième faisceau lumineux (62) dont la couleur et l'intensité lumineuse sont conformes aux normes en vigueur pour indiquer le recul d'un véhicule automobile.

14. Feu de signalisation (2A, 2B) pour véhicule automobile comprenant un dispositif de signalisation (2A, 2B) lumineux selon l'une des revendications précédentes.

## Patentansprüche

1. Leuchtende Signalvorrichtung (2A, 2B) für ein Kraftfahrzeug, die eine zum Aussenden eines ersten Lichtstrahls (8) geeignete erste Lichtquelle (6), ein optisches Sammelsystem (16), das gegenüber der ersten Lichtquelle (6) so angeordnet ist, daß der objektseitige Hauptbrennpunkt im Bereich der ersten Lichtquelle (6) angeordnet ist, und eine obere Platte (20) gegenüber einer unteren Platte (28) angeordnet ist, wobei die Platten so angeordnet sind, daß sie zum vom optischen System kommenden ersten Lichtstrahl (8) parallel oder im Wesentlichen parallel sind und daß wenigstens ein Teil des ersten Lichtstrahls (8) zwischen den Platten hindurchgeht, und die untere Platte (28) den ersten Lichtstrahl (8) reflektiert und die obere Platte (20) für den ersten Lichtstrahl (8) durchsichtig und/oder durchscheinend ist, wobei die Signalleuchte (2A, 2B) **dadurch gekennzeichnet ist, daß** sie gegenüber der oberen Platte (20) eine Reflexionswand (40) aufweist, damit zwischen der Wand und der oberen Platte (20) ein Hohlraum (46) gebildet ist, durch den sich ein Teil des ersten Lichtstrahls (8) ausbreiten kann.

2. Leuchtende Signalvorrichtung (2A, 2B) gemäß dem vorangehenden Anspruch, **dadurch gekennzeichnet, daß** die Reflexionswand (40) dazu ausgelegt ist, einen Teil des ersten Lichtstrahls (8) zu reflektieren.

3. Leuchtende Signalvorrichtung (2A, 2B) gemäß dem vorangehenden Anspruch, **dadurch gekennzeichnet, daß** die Reflexionswand (40) wenigstens zum Teil mit einer Metallschicht überzogen ist.

4. Leuchtende Signalvorrichtung (2A, 2B) gemäß einem der vorangehenden Ansprüche, **dadurch gekennzeichnet, daß** die Reflexionswand (40) gegenüber einem fernen Ende (26) der oberen Platte (20) zurückgezogen ist.

5. Leuchtende Signalvorrichtung (2A, 2B) gemäß einem der vorangehenden Ansprüche, **dadurch gekennzeichnet, daß** die obere Platte (20) im Bereich eines nahen Endes (24) an einem von der Reflexionswand (40) beabstandeten Träger (22) gehalten ist.

6. Leuchtende Signalvorrichtung (2A, 2B) gemäß dem vorangehenden Anspruch, **dadurch gekennzeichnet, daß** wenigstens ein zwischen der oberen Platte (20) und der Reflexionswand (40) gelegener Abschnitt (44) des Trägers (22) für den ersten Lichtstrahl (8) durchsichtig ist.

7. Leuchtende Signalvorrichtung (2B) gemäß einem der vorangehenden Ansprüche, **dadurch gekennzeichnet, daß** sie wenigstens eine zweite Lichtquelle (60) aufweist, die geeignet ist, einen zweiten Lichtstrahl (62) auszusenden, und daß jede zweite Lichtquelle (60) so angeordnet ist, daß ihr Lichtstrahl zwischen der Reflexionswand (40) und der unteren Platte (28) hindurchgeht.

8. Leuchtende Signalvorrichtung (2B) gemäß dem vorangehenden Anspruch, **dadurch gekennzeichnet, daß** sie wenigstens zwei erste Lichtquellen (6) aufweist, wobei jede erste Lichtquelle ihrem eigenen optischen Sammelsystem (16) gegenüberliegt, und daß sie wenigstens eine zweite Lichtquelle (60) aufweist, die zwischen zwei ersten Lichtquellen angeordnet ist.

9. Leuchtende Signalvorrichtung (2B) gemäß dem vorangehenden Anspruch, **dadurch gekennzeichnet, daß** sie wenigstens eine zweite Lichtquelle (60) aufweist, die gegenüber der Position einer ersten Lichtquelle (6) näher an oder weiter entfernt von der unteren Platte (28) ist.

10. Leuchtende Signalvorrichtung (2B) gemäß einem der Ansprüche 7 bis 9, **dadurch gekennzeichnet, daß** wenigstens eine erste und eine zweite Lichtquelle auf einer selben ebenen oder im Wesentlichen ebenen und zur unteren Platte (28) senkrechten der im Wesentlichen senkrechten Fläche angeordnet sind.

11. Leuchtende Signalvorrichtung (2B) gemäß dem vorangehenden Anspruch, **dadurch gekennzeichnet, daß** wenigstens zwei zweite Lichtquellen (60) zwischen zwei ersten Lichtquellen (6) angeordnet sind.

12. Leuchtende Signalvorrichtung (2B) gemäß einem der Ansprüche 7 bis 11, **dadurch gekennzeichnet, daß** wenigstens eine zweite Lichtquelle (60) einen zweiten Lichtstrahl (62) mit einer gegenüber einem von einer ersten Lichtquelle (6) ausgesandten ersten Lichtstrahl (8) anderen Farbe oder einem anderen Farbton aussendet.

13. Leuchtende Signalvorrichtung (2B) gemäß dem vorangehenden Anspruch, **dadurch gekennzeichnet, daß** wenigstens eine erste Lichtquelle (6) einen ersten Lichtstrahl (8) aussendet, dessen Farbe und Lichtstärke den geltenden Normen zum Anzeigen einer Richtungsänderung eines Kraftfahrzeugs entsprechen, und daß wenigstens eine zweite Lichtquelle (60) einen zweiten Lichtstrahl (62) aussendet, dessen Farbe und Lichtstärke den geltenden Normen zum Anzeigen des Rückwärtsfahrens eines Kraftfahrzeugs entsprechen.

14. Signalleuchte (2A, 2B) für ein Kraftfahrzeug mit einer leuchtenden Signalvorrichtung (2A, 2B) gemäß einem der vorangehenden Ansprüche.

## Claims

1. A light signalling device (2A, 2B) for a motor vehicle, comprising a first light source (6) adapted to emit a first light beam (8), a converging optical system (16) positioned opposite the first light source (6) in such a way that its main object focus is located at the first light source (6) and an upper plate (20) opposite a lower plate (28), wherein said plates are arranged in such a way as to be parallel or substantially parallel to the first light beam (8) coming from the optical system and at least one part of the first light beam (8) passes between said plates, and wherein the lower plate (28) reflects the first light beam (8) and the upper plate (20) is transparent and/or translucent to the first light beam (8), the signalling device (2A, 2B) being **characterized in that** it comprises a reflective wall (40) opposite the upper plate (20), in such a way as to form between said wall and the upper plate (20) a cavity (46) through which a part of the first light beam (8) is able to propagate.

2. The light signalling device (2A, 2B) according to the preceding claim, **characterized in that** the reflective wall (40) is adapted to reflect a part of the first light beam (8).

3. The light signalling device (2A, 2B) according to the preceding claim, **characterized in that** the reflective wall (40) is covered at least in part with a metal layer.

4. The light signalling device (2A, 2B) according to one of the preceding claims, **characterized in that** the reflective wall (40) is set back from a distal end (26) of the upper plate (20).

5. The light signalling device (2A, 2B) according to one of the preceding claims, **characterized in that** the upper plate (20) is held at a proximal end (24) to a support (22) distant from the reflective wall (40).

6. The light signalling device (2A, 2B) according to the preceding claim, **characterized in that** at least one portion (44) of the support (22), located between the upper plate (20) and the reflective wall (40), is transparent to the first light beam (8).

7. The light signalling device (2B) according to one of the preceding claims, **characterized in that** it comprises at least one second light source (60) adapted to emit a second light beam (62), and **in that** each second light source (60) is arranged in such a way that its light beam passes between the reflective wall (40) and the lower plate (28).

8. The light signalling device (2B) according to the preceding claim, **characterized in that** it comprises at least two first light sources (6), each first light source facing its own converging optical system (16), and **in that** it comprises at least one second light source (60) arranged between two first light sources.

9. The light signalling device (2B) according to the preceding claim, **characterized in that** it comprises at least one second light source (60) closer to or farther from the lower plate (28), with respect to the position of a first light source (6).

10. The light signalling device (2B) according to one of claims 7 to 9, **characterized in that** at least one first and one second light source are arranged on a same planar or substantially planar surface, perpendicular or substantially perpendicular to the lower plate (28).

11. The light signalling device (2B) according to the preceding claim, **characterized in that** at least two second light sources (60) are arranged between two first light sources (6).

12. The light signalling device (2B) according to one of claims 7 to 11, **characterized in that** at least one second light source (60) emits a second light beam (62) of different colour or stain, with respect to a first light beam (8) emitted by a first light source (6).

13. The light signalling device (2B) according to the preceding claim, **characterized in that** at least one first light source (6) emits a first light beam (8) whose colour and light intensity are compliant with the standards in force to indicate the change of direction of a motor vehicle, and **in that** at least one second light source (60) emits a second light beam (62) whose colour and light intensity are compliant with the standards in force to indicate the reverse motion of a motor vehicle.

14. The signalling lamp (2A, 2B) for a motor vehicle comprising a light signalling device (2A, 2B) according to one of the preceding claims.
